# EUROPEAN PATENT APPLICATION

(11) **EP 2 803 884 A2**
(43) Date of publication of application: **19.11.2014**
(21) Application number: 14166260.1
(22) Date of filing: 28.04.2014
(51) Int. Cl.: F16K 3/24

(54) **High performance pulse valve**

(30) Priority: 13.05.2013 US 201313892938
(71) Applicant: Alstom Technology Ltd, 5400 Baden (CH)
(72) Inventor: Hjelmberg, Anders Erik Martin, 352 44 Vaxjo (SE); Andersson, Rune Sten, 352 42 Vaxjo (SE)

(57) **Abstract**

A pulse valve arrangement (210) includes a valve housing (228) on which is fixed a control valve. The valve housing (228) includes a circular cylindrical portion (228b) with a valve member (240) movably arranged therein. The valve chamber (228b) has an inlet (252) adapted to be connected to a pressure medium source (212) for allowing pressure medium to flow into the valve chamber (228b) and an outlet (218) through which pressure medium flows out of the valve chamber (228b). The control valve may be closed in which the outlet (218) of the valve chamber (228b) is moved to a closing position blocking the flow of pressure medium, or may be opened in which the outlet (218) of the valve chamber (228b) is moved to an opening position allowing a pulse of pressure medium therethrough. The valve member (240) within the valve housing (228) is freely displaceable within the circular cylindrical portion (228b) of the valve housing (228) based on the pressure within the valve chamber (228b) as controlled by the control valve.

## Description

### FIELD OF THE INVENTION

The present invention relates to a pulse valve. More particularly, the present invention relates to a pulse valve for higher pressure pulses of compressed air useful for cleaning filter elements in a filtering plant for cleaning polluted gases.

### BACKGROUND OF THE INVENTION

A known valve arrangement disclosed in U.S. Patent Number 5,533,706 incorporated herein in its entirety by reference, is used for delivering pulses of compressed air to filter elements, such as filter bags, in a filtering plant useful for cleaning polluted gases. The compressed air pulses are delivered to the interior of the filter elements to clean the elements by shaking and blowing loose dust cakes which, in the cleaning of polluted gases, attach to the walls of the filter elements. For this purpose of cleaning filter elements, the known valve arrangement is mounted on a compressed air tank. The valve arrangement includes a valve housing having a circular cylindrical portion forming a valve chamber, a control valve and a valve member therein. The valve chamber has an inlet adapted to be connected to a pressure medium source for allowing a pressure medium to flow into the valve chamber, and an outlet through which pressure medium flows out of the valve chamber. The control valve is movable between a closed position in which the outlet of the valve chamber is closed and an open position in which the outlet of the valve chamber is open. The valve member is freely displaceable within the circular cylindrical portion of the valve housing based on the pressure within the valve chamber. The valve member includes a piston which is moveable between a closing position in which the piston is adapted to prevent the flow of pressure medium and an opening position in which the piston is adapted to permit the flow of pressure medium. The inlet of the valve chamber is defined by an annular gap formed between the piston and the circular cylindrical portion of the valve housing.
The circular cylindrical portion of the valve housing preferably extends so far in the axial direction of the piston as to surround at least the major portion of and preferably the entire piston when the piston is in its opening or closing position. Pressure medium ports are formed in the wall of the circular cylindrical portion at a free end thereof. The pressure medium ports so formed at the free end of the circular cylindrical portion wall are limited in size so as to ensure the remaining wall provides sufficient guidance surface to support plunger movement and alignment. However, the remaining wall of the circular cylindrical portion restricts compressed air flow causing significant valve pressure loss. Development of a pulse valve with increased compressed air flow is needed in filtering plants useful for cleaning polluted gases.

### SUMMARY OF THE INVENTION

The subject pulse valve arrangement enables increased compressed air flow, increased pressure pulses of compressed air and increased valve reliability and performance. The subject pulse valve arrangement provides for an increased cross section area dedicated to pressure medium ports with the remaining circular cylindrical portion wall significantly limited in size to reduce undesirable pressure loss. By reducing pressure loss, the subject pulse valve achieves higher pressure pulses of compressed air to filter bag elements enabling more filtration area cleaning per pulse per valve. Additionally, an increased cross sectional area dedicated to pressure medium ports for increased compressed air flow means less wall to plunger contact. Unexpectedly, less wall to plunger contact results in fewer plunger malfunctions caused by grit on wall surfaces, wall dents, plunger misalignment, and the like, contrary to prior teachings.

The subject pulse valve arrangement for cleaning filter units is useful for cleaning polluted gas. As such, the subject pulse valve arrangement comprises a valve housing with an interior area, a valve fixed on the valve housing and a valve member arranged within the valve housing. The valve fixed on the valve housing is opened to decrease pressure and lift the valve member causing free ends of the valve member to contact the valve housing. When the free ends of the valve member contact the valve housing, a compressed air pulse is supplied through housing openings and into a pressure tube to clean associated filter units. The housing openings through which the compressed air pulse is supplied, provide an open area suitable for increased fluid flow, increased pulse pressure, and reduced pressure drop over that of the prior art pulse valve arrangement. As described in more detail below, the subject housing openings provide about 25% to about 125% increased open area, or about 55% to about 95 % increased open area. In doing so, valve housing causes a reduced pressure drop over that of the prior art. Further, the valve fixed on the valve housing may be closed to increase pressure and move the valve member outwardly so as to block compressed air flow from housing openings and the pressure tube between filter unit cleanings.

Also disclosed herein is a method of using the subject pulse valve arrangement. The method comprises opening a valve fixed on a valve housing to cause a drop in pressure within the valve housing moving a valve member into an opening position to allow a pulse of compression air from a compression air tank to flow through housing openings and into a pressure pipe for filter cleaning. The subject method also includes closing the valve fixed on the valve housing to cause an increase in pressure within the valve housing to move the valve member into a closing position to block compression air from a compression air tank from flowing through housing openings and into the pressure pipe between filter cleanings. The subject method also provides for the housing having housing openings with an open area suitable for increased fluid flow, increased pulse pressure, and reduced pressure drop over that of the prior art. As such, the subject housing openings provide about 25% to about 125%, or about 55% to about 95 % increased open area, and the valve housing causes a reduced pressure drop over that of the prior art.

### BRIEF DESCRIPTION OF THE DRAWINGS

The subject pulse valve is described in more detail below with reference to the accompanying drawings.
FIGURE 1 is a side cross-sectional view showing a valve arrangement according to the prior art in the closed position.
FIGURE 2 is a side partial cut away view of the valve arrangement of FIGURE 1 in the open position positioned within a compressed air tank.
FIGURE 3 is a side cross-sectional view showing a valve arrangement according to the present invention in the closed position.
FIGURE 4 is a side partial cut away view of a valve arrangement similar to that of FIGURE 3 in the open position positioned within a compressed air tank.

### DETAILED DESCRIPTION

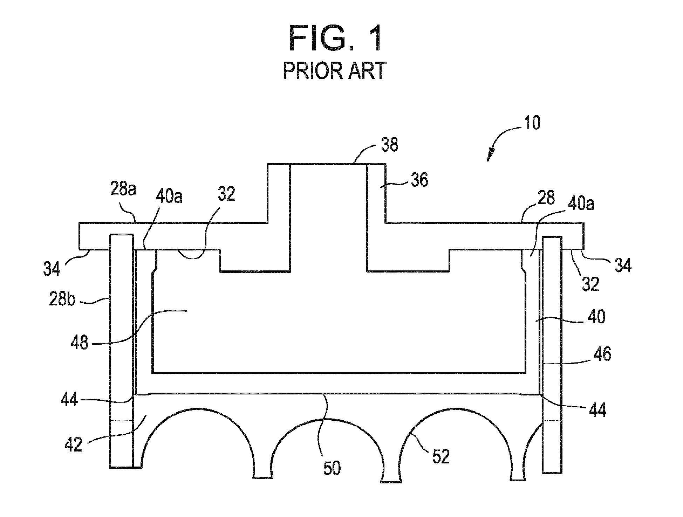

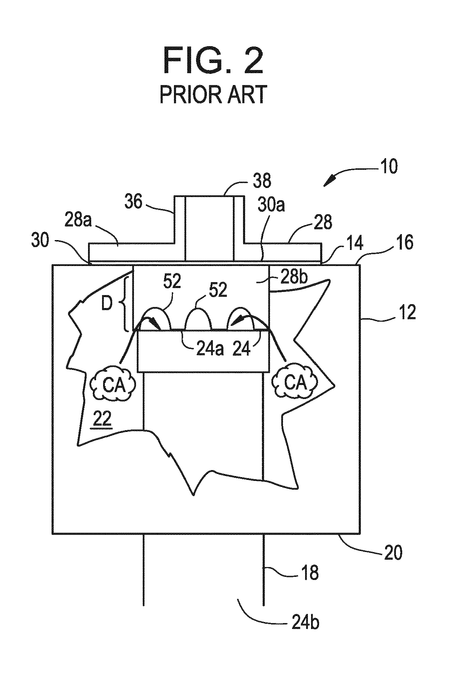

The prior art valve arrangement 10 illustrated in FIGURES 1 and 2 is used for delivering compressed-air "CA" pulses to vertically arranged, bag-shaped filter elements (not shown) in a filtering plant useful for cleaning polluted gases. The valve arrangement 10 is mounted in a pressure medium tank 12 through a circular opening 14 provided in the upper wall 16 of the tank 12. The tank 12 is a compressed air tank.

A vertical pressure tube 18 coaxial with opening 14, extends through the lower wall 20 and into interior area 22 of tank 12. An upper end 24 of pressure tube 18 is arranged a distance "D" below opening 14. The upper end 24 of the pressure tube 18 forms a valve seat 24a, and the lower end 24b of pressure tube 18 opens outside tank 12 fluidly connected to openings in the bag-shaped filter elements (not shown).

Valve arrangement 10 has a valve housing 28 consisting of two circular, coaxial parts, namely an upper part 28a and a tubular lower part 28b fixed together. A pipe socket 30, in which lower part 28b is fixed, is welded or similarly fixed in opening 14. The lower surface 32 of upper part 28a has an annular upper flange 34 engaging the upper end 30a of the pipe socket 30, when the lower part 28b is arranged in pipe socket 30. The upper part 28a also has and extended duct 36 with an open end 38. A valve (not shown) such as a solenoid valve or the like is fluidly connected to duct 36 at open end 38.

A valve member 40 in the form of a circular-cylindrical piston with a substantially "U"-shaped cross section, is disposed in an interior area 42 of lower part 28b. The outer diameter "OD" of valve member 40 is slightly smaller than the inner diameter "ID" of lower part 28b, so as to provide an annular gap 44 between valve member 40 and interior wall surface 46 of the lower part 28b. Gap 44 provides a continuous fluid communication between the interior area 22 of pressure tank 12 and the interior area 48 of valve member 40. Valve member 40 constitutes the main valve of valve arrangement 10 and is freely displaceable between an outer closing position, in which base 50 of valve member 40 sealingly contacts valve seat 24a of the pressure tube 18, and an inner opening position (FIGURE 1 and 2), in which base 50 of valve member 40 is lifted off valve seat 24a so that free ends 40a of valve member 40 contact lower surface 32 of upper part 28a. In the closing position of valve member 40, the valve (not shown) fixed to extended duct 36 is in a closed position.

When valve member 40 is to be opened from the closing position to deliver a compressed-air CA pulse of short duration to the bag-shaped filter elements via the pressure tube 18, the valve fixed to extended duct 36 is opened creating a reduction in pressure lifting valve member 40 causing free ends 40a of valve member 40 to contact lower surface 32 of upper part 28a. As such, compressed air CA flows through openings 52 in lower part 28b and into pressure tube 18.

When valve member 40 is to be closed from the opening position illustrated in FIGURES 1 and 2, the valve fixed to extended duct 36 is closed to create an increase in pressure that forces valve member 40 to move outwardly until base 50 is in sealing contact with valve seat 24a. As such, compressed air CA is blocked from flowing through openings 52 in lower part 28b and into pressure tube 18.

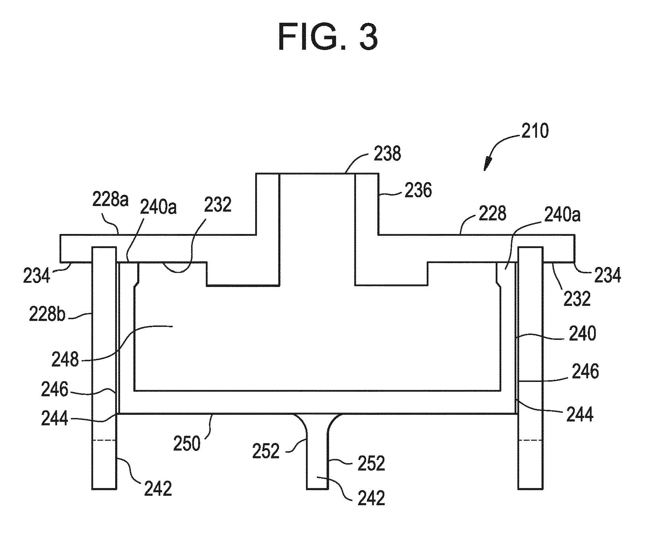

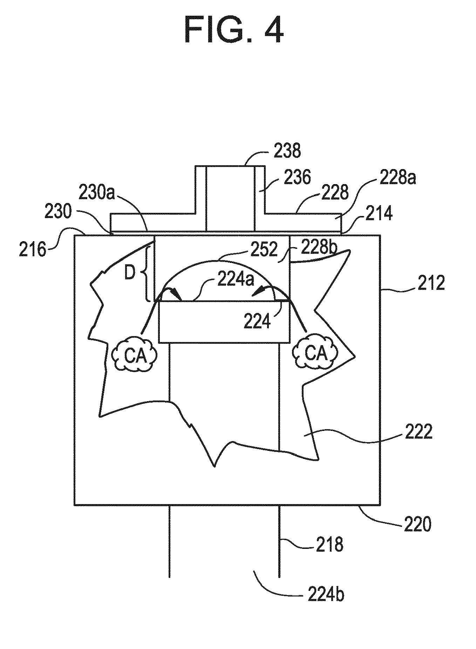

Now referring to FIGURES 3 and 4, the subject pulse valve device 210 is illustrated. Pulse valve device 210 has features in common with those of pulse valve device 10 illustrated in FIGURES 1 and 2. As such, features illustrated in FIGURES 3 and 4 common to those of FIGURES 1 and 2 are signified using the same reference numbers but with the number "2" preceding them.

The subject pulse valve arrangement 210 is useful for delivering increased pressure compressed-air "CA" pulses to vertically arranged, bag-shaped filter elements (not shown) in a filtering plant used to clean polluted gases. The subject pulse valve arrangement 210 is mounted in a pressure medium tank 212 through a circular opening 214 provided in the upper wall 216 of the tank 212. The tank 212 is a compressed air tank.

A vertical pressure tube 218 coaxial with opening 214, extends through the lower wall 220 and into interior area 222 of tank 212. An upper end 224 of pressure tube 218 is arranged a distance "D" below opening 214. The upper end 224 of the pressure tube 218 forms a valve seat 224a, and the lower end 224b of pressure tube 218 opens outside tank 212 fluidly connected to openings in the bag-shaped filter elements (not shown).

The subject pulse valve arrangement 210 has a valve housing 228 consisting of two circular, coaxial parts, namely an upper part 228a and a tubular lower part 228b fixed together. A pipe socket 230, in which lower part 228b is fixed, is welded or similarly fixed in opening 214. The lower surface 232 of upper part 228a has an annular upper flange 234 engaging the upper end 230a of the pipe socket 230, when the lower part 228b is arranged in pipe socket 230. The upper part 228a also has and extended duct 236 with an open end 238. A solenoid valve (not shown) or the like is fluidly connected to duct 236 at open end 238.

A valve member 240 in the form of a circular cylindrical piston with a substantially "U"-shaped cross section, is disposed in an interior area 242 of lower part 228b. The outer diameter "OD" of valve member 240 is slightly smaller than the inner diameter "ID" of lower part 228b, so as to provide an annular gap 244 between valve member 240 and interior wall surface 246 of the lower part 228b. Gap 244 provides a continuous fluid communication between the interior area 222 of pressure tank 212 and the interior area 248 of valve member 240. Valve member 240 constitutes the main valve of valve arrangement 210 and is freely displaceable between an outer closing position, in which base 250 of valve member 240 sealingly contacts valve seat 224a of the pressure tube 218, and an inner opening position (FIGURES 3 and 4), in which base 250 of valve member 240 is lifted off valve seat 224a so that free ends 240a of valve member 240 contact lower surface 232 of upper part 228a. In the closing position of valve member 240, the solenoid valve (not shown) is in a closed position.

When valve member 240 is to be opened from the closing position to deliver a compressed air pulse of short duration to the bag-shaped filter elements via the pressure tube 218, the solenoid valve is opened creating a reduction in pressure lifting valve member 240 causing free ends 240a of valve member 240 to contact lower surface 232 of upper part 228a. As such, compressed air CA flows through openings 252 in lower part 228b and into pressure tube 218.

When valve member 240 is to be closed from the opening position illustrated in FIGURES 3 and 4, the solenoid valve is closed to create an increase in pressure that forces valve member 240 to move outwardly with base 250 in sealing contact with valve seat 224a.

A method of using the pulse valve arrangement 210 of the present invention comprises opening a solenoid valve to cause a drop in pressure within a valve housing 228 and valve member 240 to move valve member 240 to an opening position, and allowing a pulse of compression air from a compression air tank to flow through openings 252 in valve housing 228 and into pressure pipe 218 for filter cleaning. Also, the pulse valve arrangement 210 of the present invention may comprise closing a solenoid valve to cause an increase in pressure within a valve housing 228 and valve member 240 to move valve member 240 to a closing position, and blocking a pulse of compression air from a compression air tank from flowing through openings 252 in valve housing 228 and into pressure pipe 218 between filter cleanings.

According to the teachings of the prior art valve arrangement 10, the circular-cylindrical lower part 28b extends as far down as the upper end 24 of the pressure tube 18 so that the entire valve member 40 is surrounded by the lower part 28b when the valve member 40 is in its closing position. As a result, the valve member 40 is accurately guided during its entire displacement, thus obviating the risk of jamming. Also, lower part 28b has a plurality of openings 52 which prevent undesired throttling of the compressed air CA flow from the pressure tank 12 to the pressure tube 18 when valve member 40 is in its opening position.

Unexpectedly and contrary to these prior teachings, it has been discovered that having the circular-cylindrical lower part 28b extending as far down as the upper end 24 of the pressure tube 18 so that the entire valve member 40 is surrounded by the lower part 28b when the valve member 40 is in its closing position is not necessarily desirable. As a result of the entire valve member 40 surrounded by the lower part 28b the valve member 40 may have a tendency to jam due to grit on interior wall surface 46, dents in lower part 28b, or the like. To correct this problem, the subject valve arrangement 210 eliminates as much of lower part 228b by significantly expanding openings 252 while still providing structural integrity to the overall valve arrangement 210. In correcting the problem, open area of openings 252 are increased resulting in increased fluid flow allowing for increased pulse pressure. Increased pulse pressure allows for more filtration area cleaning per pulse per valve. As such, in the subject valve, openings 252 provide about 25% to about 125% greater open area, or about 55% to about 95 % greater open area for fluid flow than that provided by openings 52 on commercially available prior art pulse valves described herein.

Additionally, lower part 28b was taught as having a plurality of openings 52 which prevented undesired throttling of the compressed air CA flow from the pressure tank 12 to the pressure tube 18 when valve member 40 is in its opening position. Unexpectedly, it has been discovered that the plurality of openings 52 taught by the prior art cause a significant pressure drop significantly limiting the pressure of the compressed air CA pulse delivered to the pressure tube 18. To correct this problem, the subject valve arrangement 210 has significantly expanded open area provided by openings 252 for fluid flow as described above, to eliminate the observed significant pressure drop and hence significantly increase the pressure of the compressed air CA pulse delivered to the pressure tube 218. Significantly increasing the pressure of the compressed air CA pulse delivered to the pressure tube is considered desirable by delivering higher pressure pulses of compressed air CA to filter bag elements enabling more filtration area cleaning per pulse per valve.

While a preferred embodiment has been shown and described, various modifications and substitutions may be made thereto without departing from the spirit and scope of the invention. Accordingly, it is to be understood that the present invention has been described by way of illustration and not limitation.

## Claims

1. A pulse valve arrangement (210) for cleaning filter units useful in cleaning polluted gas **CHARACTERISED by**
a valve housing (228) with an interior area (242);
a valve fixed on the valve housing (228) and a valve member (240) arranged within the valve housing (228);
the valve fixed on the valve housing (228) is opened to decrease pressure and lift the valve member (240) causing free ends (240a) of the valve member (240) to contact the valve housing (228) allowing a compressed air (CA) pulse through housing openings (252) and into a pressure tube (218);
the valve fixed on the valve housing (228) is closed to increase pressure and move the valve member (240) outwardly blocking compressed air (CA) flow through housing openings (252) and the pressure tube (218); and
housing openings (252) provide an open area suitable for increased fluid flow, increased pulse pressure, and reduced pressure drop.

2. The pulse valve arrangement (210) of claim 1, wherein housing openings (252) provide about 25% to about 125% increased open area.

3. The pulse valve arrangement (210) of claim 1, wherein housing openings (252) provide about 55% to about 95 % increased open area.

4. The pulse valve arrangement (210) of claim 1, wherein the valve housing (228) causes a reduced pressure drop.

5. A method of using a pulse valve arrangement (210) **CHARACTERISED by**
opening a valve fixed on a valve housing (228) to cause a drop in pressure within the valve housing (228) moving a valve member (240) into an opening position to allow a pulse of compression air (CA) from a compression air tank (212) to flow through housing openings (252) and into a pressure pipe (218) for filter cleaning;
closing the valve fixed on the valve housing (228) to cause an increase in pressure within the valve housing (228) moving the valve member (240) into a closing position to block compression air (CA) from a compression air tank (212) from flowing through housing openings (252) and into the pressure pipe (218) between filter cleanings; and
providing housing openings (252) with an open area suitable for increased fluid flow, increased pulse pressure, and reduced pressure drop.

6. The method of claim 5, wherein housing openings (252) provide about 25% to about 125% increased open area.

7. The method of claim 5, wherein housing openings (252) provide about 55% to about 95 % increased open area.

8. The method of claim 5, wherein the valve housing (228) causes a reduced pressure drop.
